# EUROPEAN PATENT APPLICATION

(11) **EP 1 950 569 A1**
(43) Date of publication of application: **30.07.2008**
(21) Application number: 05799298.4
(22) Date of filing: 25.10.2005
(51) Int. Cl.: G01N 35/08, G01N 21/05, G01N 27/06, G01N 27/28, G01N 27/447, G01N 30/74, G01N 37/00

(54) **FLOW CELL AND PROCESS FOR PRODUCING THE SAME**

(71) Applicant: Shimadzu Corporation, Kyoto-shi, Kyoto 604-8511 (JP)
(72) Inventor: KANAI, Masaki, Kyoto 604-8511 (JP); FUJIYAMA, Yoichi, Kyoto 604-8511 (JP); AKECHI, Masakazu, Kyoto 604-8511 (JP)
(74) Representative: Schoppe, Fritz
(86) International application number: PCT/JP2005/019562
(87) International publication number: WO 2007/049332

(57) **Abstract**

To provide a flow cell that is free from liquid leakage and excels in chemical resistance. There is provided a preferred form of flow cell comprising flat-plate glass substrate (3); adherent fluororesin sheet (5) having a groove as flow channel (7) made by cutting machining; and glass substrate (1) as lid member furnished with through-holes (9, 11) as fluid inlet and outlet at positions corresponding to both end portions of the groove. The fluororesin sheet (5) is interposed between the glass substrates (1, 3) and, while heating at a temperature not lower than the melting point of the fluororesin sheet (5), pressurized so that the glass substrates (1, 3) are bonded together by the fluororesin sheet (5) per se. Flow channel member (17) is constructed by the glass substrate (3) and, bonded thereonto, the fluororesin sheet (5).

## Description

### TECHNICAL FIELD

The present invention relates to a flow cell which can be used as a flowmeter or an electric conductivity meter for use in an analytical instrument, a fluorescence detector for liquid chromatography, a microchip for electrophoretic separation, or the like and a method for producing such a flow cell.

### BACKGROUND ART

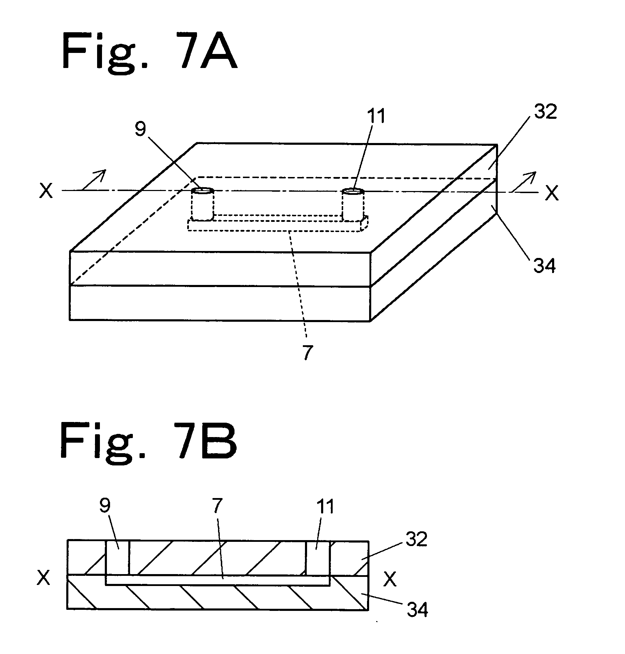

In recent years, various flow cells capable of handling a trace amount of fluid have been developed using semiconductor manufacturing techniques such as etching used to form a fine groove or the like. Fig. 7(A) is a perspective view showing one example of the structure of a conventional flow cell for handling a trace amount of fluid, and Fig. 7(B) is a sectional view taken along the X-X line in Fig. 7(A).

This flow cell includes a plate-shaped member 34 having a groove as a flow path 7 formed in the surface thereof and a plate-shaped member 32 having through holes 9 and 11 formed at positions corresponding to both ends of the groove, and it is obtained by bonding together the plate-shaped member 32 and the plate-shaped member 34.

Examples of the plate-shaped members 32 and 34 conventionally used include glass substrates, silicon substrates, and resin substrates. For example, in a case where a glass substrate or a silicon substrate is used as the plate-shaped member 34, a groove can be formed by etching using a chemical solution or a reactive gas. On the other hand, in a case where a resin substrate is used as the plate-shaped member 34, a groove can be formed by molding.

A method for bonding together the plate-shaped members 32 and 34 depends on the materials thereof. For example, in a case where the plate-shaped members 32 and 34 are both silicon substrates, a diffusion bonding method is typically used. Further, in a case where the plate-shaped members 32 and 34 are both glass substrates or resin substrates, a heat sealing method is typically used. Furthermore, in a case where one of the plate-shaped members 32 and 34 is a silicon substrate and the other is a glass substrate, an anodic bonding method is typically used.

Even such a conventional flow cell can handle a trace amount of fluid. However, in a case where a silicon substrate or a glass substrate is used as a plate-shaped member to produce such a conventional flow cell, it is necessary to form a groove using semiconductor manufacturing techniques such as etching using a chemical solution or a reactive gas. This requires an exposure device for transferring the shape of a groove onto the plate-shaped member, facilities for a chemical solution or a reactive gas to be used, and the like, thereby resulting in high production costs.
On the other hand, in a case where a resin substrate is used as a plate-shaped member to produce such a conventional flow cell, there is an advantage that a groove can be formed by molding and therefore the cost for forming a groove can be reduced. However, resin is poor in resistance to organic solvents, and therefore, such a conventional flow cell has limited uses.

In order to eliminate the necessity to form a groove in a glass substrate by etching for cost reduction and to improve resistance to organic solvents, Japanese Patent Application Laid-open No. H8-35927 (hereinafter, simply referred to as "Patent Document 1") proposes a flow cell using a glass substrate having a groove formed therein as a plate-shaped member. This flow cell is obtained by interposing a fluorocarbon resin as a spacer between two glass substrates to obtain a laminate, holding both ends of the laminate, and applying pressure to both ends of the laminate to bring the fluorocarbon resin into close contact with the glass substrates.

### DISCLOSURE OF THE INVENTION

### PROBLEMS TO BE SOLVED BY THE INVENTION

However, when the spacer is interposed between the glass substrates and only pressure is applied, with no bonding, a gap is formed between each glass substrate and the spacer. Particularly, pressure is not applied to the central area of the flow cell, and therefore liquid leakage is likely to occur at the central area of the flow cell. Particularly, liquid leakage is likely to occur when an organic solvent flows through the flow cell.
It is therefore an object of the present invention to provide a flow cell which can be produced at lower cost without forming a groove in a plate-shaped member by etching and which is free from liquid leakage and excellent in chemical resistance.

### MEANS FOR SOLVING THE PROBLEMS

In order to achieve the above object, the present invention is directed to a flow cell including a flow path member, at least a surface layer of which is made of a fluorocarbon resin, the surface layer having a groove as a flow path formed therein; and a cover member bonded to the surface layer of the flow path member by the fluorocarbon resin itself, wherein at least either the flow path member or the cover member has two through holes as a fluid inlet and a fluid outlet formed at positions corresponding to both ends of the groove.

The flow path member according to one embodiment of the present invention has a structure in which a fluorocarbon resin film is laminated on the surface of a flat plate-shaped member, and therefore the fluorocarbon resin film serves as the surface layer made of a fluorocarbon resin. In this case, the groove is constituted from a through hole formed in the fluorocarbon resin film and the surface of the flat plate-shaped member. Further, the fluorocarbon resin film itself interposed between the flat plate-shaped member and the cover member bonds these members together.

The flow path member according to another embodiment of the present invention is formed from a fluorocarbon resin body entirely made of a fluorocarbon resin, and therefore, a surface layer of the fluorocarbon resin body serves as the surface layer made of a fluorocarbon resin. In this case, the groove is a recess formed in the surface of the fluorocarbon resin body.
Further, the fluorocarbon resin film or the fluorocarbon resin body can be made of an adhesive fluorocarbon resin which exhibits adhesiveness to a substrate made of another material at a certain temperature or higher.

The adhesive fluorocarbon resin exhibits adhesiveness also to a substrate made of another material, such as a glass substrate, a metal plate, or a silicon substrate, at a certain temperature (e.g., at a temperature near its glass transition temperature). However, at a temperature lower than the certain temperature, the surface of the adhesive fluorocarbon resin exhibits self-adsorption properties only. Therefore, bonding between the flow path member and the cover member is carried out at a temperature near or higher than the glass transition temperature of the adhesive fluorocarbon resin but lower than the decomposition temperature of the adhesive fluorocarbon resin. In order to further improve adhesion between the flow path member and the cover member, bonding between the flow path member and the cover member is preferably carried out at a temperature near or higher than the melting point of the adhesive fluorocarbon resin but lower than the decomposition temperature of the adhesive fluorocarbon resin. As such an adhesive fluorocarbon resin, Neoflon™ EFEP (manufactured by Daikin Industries, Ltd.) or the like can be used.

Further, at least a part of the bonding surface between the flow path member and the cover member is preferably covered with a metal layer. Further, the metal layer preferably covers the glass substrate including the edge of the groove, or the 'flow path'.

The present invention is also directed to a method for producing a flow cell, including the steps of.
(A) forming a through hole in the form of a groove as a flow path in a fluorocarbon resin film;
(B) forming two through holes as a liquid inlet and a liquid outlet in either a flat plate-shaped member or a cover member at positions corresponding to both ends of the groove; and
(C) interposing the fluorocarbon resin film between the flat plate-shaped member and the cover member so that one end of the groove is aligned with one of the through holes and the other end of the groove is aligned with the other through hole to obtain a laminate, and heating and pressing the laminate until the fluorocarbon resin film exhibits adhesiveness so that the fluorocarbon resin film bonds the flat plate-shaped member and the cover member together.

The present invention is also directed to another method for producing a flow cell, including the steps of:
(A) laminating a fluorocarbon resin body on the surface of a molding die having a projection formed thereon by which a groove as a flow path is to be formed, and relatively pressing the fluorocarbon resin body against the molding die to mold the fluorocarbon resin body while heating the fluorocarbon resin body to a temperature near the melting point of the fluorocarbon resin body;
(B) forming two through holes as a liquid inlet and a liquid outlet in the fluorocarbon resin body or a cover member at positions corresponding to both ends of the groove; and
(C) laminating the cover member on the molded surface of the fluorocarbon resin body (in a case where the through holes are formed in the cover member, the cover member is laminated on the molded surface of the fluorocarbon resin body so that one end of the groove is aligned with one of the through holes as a liquid inlet and the other end of the groove is aligned with the other through hole as a liquid outlet) and pressing the laminate while heating until the fluorocarbon resin body exhibits adhesiveness to bond the fluorocarbon resin body and the cover member together.

The temperature to which the fluorocarbon resin film or the fluorocarbon resin body is heated to allow the fluorocarbon resin film or the fluorocarbon resin body to exhibit adhesiveness can be set to a temperature equal to or higher than the melting point of a fluorocarbon resin constituting the fluorocarbon resin film or the fluorocarbon resin body but lower than the decomposition temperature of the fluorocarbon resin.
As the fluorocarbon resin, an adhesive fluorocarbon resin can be used. In this case, the temperature to which the fluorocarbon resin film or the fluorocarbon resin body is heated to allow the fluorocarbon resin film or the fluorocarbon resin body to exhibit adhesiveness can be set to a temperature equal to or higher than the temperature, at which the adhesive fluorocarbon resin begins to exhibit adhesiveness, but lower than the decomposition temperature of the adhesive fluorocarbon resin.
The method for producing a flow cell according to the present invention may further include, prior to bonding the flow path member and the cover member together, the step of forming a metal layer on at least a part of the surface of either of the members to be bonded to the fluorocarbon resin film or the fluorocarbon resin body.

### Effect of the Invention

As described above, in the case of the conventional flow cell disclosed in Patent Document 1, there is a case where a gap is formed between members constituting the flow cell only by holding both ends of the flow cell and applying pressure to both ends of the flow cell, and therefore a solvent or the like leaks from the gap. On the other hand, in the case of the flow cell according to the present invention, the flow cell is heated and pressed to allow a fluorocarbon resin interposed between members constituting the flow cell to bond these members together, thereby increasing the bonding strength between these members and therefore preventing formation of a gap and leakage of a solvent

As described above, since the fluorocarbon resin itself bonds members constituting the flow cell together, liquid leakage is less likely to occur in the flow cell according to the present invention than in a flow cell obtained by pressing a laminate of two substrates, between which a spacer is interposed, to bring these substrates into close contact with each other. Therefore, it is not necessary for the flow cell according to the present invention to use a jig for applying pressure to substrates to keep close contact between these substrates, thereby reducing the size of the flow cell. Further, in the case of the conventional flow cell disclosed in Patent Document 1, both ends of the flow cell are pressed using screws, which makes it difficult to stack the flow cells to produce a multiple flow cell having multiple flow paths. In addition, in order to change some of the flow cells of such a multiple flow cell, it is necessary to completely disassemble the multiple flow cell. On the other hand, in the case of a multiple flow cell using the flow cells according to the present invention, the flow cells are independent of one another, and therefore some of the flow cells can be easily changed.

Further, since the flow path of the flow cell according to the present invention is formed in the fluorocarbon resin, the flow cell according to the present invention can handle organic solvents and the like which cannot be handled by conventional flow cells made of acrylic resin or polycarbonate resin.
By using an adhesive fluorocarbon resin as the fluorocarbon resin, a groove can be more easily formed in the adhesive fluorocarbon resin by molding or cutting. Therefore, it is possible to form a groove as a flow path at lower cost as compared to a case where a groove is formed in a glass substrate or a silicon substrate.

Further, by forming a metal thin film on the surface of a member to be bonded to the fluorocarbon resin, it is possible to enhance bonding strength between members constituting the flow cell according to the present invention, thereby improving the reliability of the flow cell according to the present invention. Further, by using the metal thin film as electrodes, it is also possible to allow the flow cell according to the present invention to have higher performance.

### BEST MODES FOR CARRYING OUT THE INVENTION

Hereinbelow, preferred embodiments of the present invention will be described with reference to the accompanying drawings. It is to be noted that these preferred embodiments use an adhesive fluorocarbon resin as a fluorocarbon resin, but a fluorocarbon resin other than the adhesive fluorocarbon resin can also be used in the present invention.

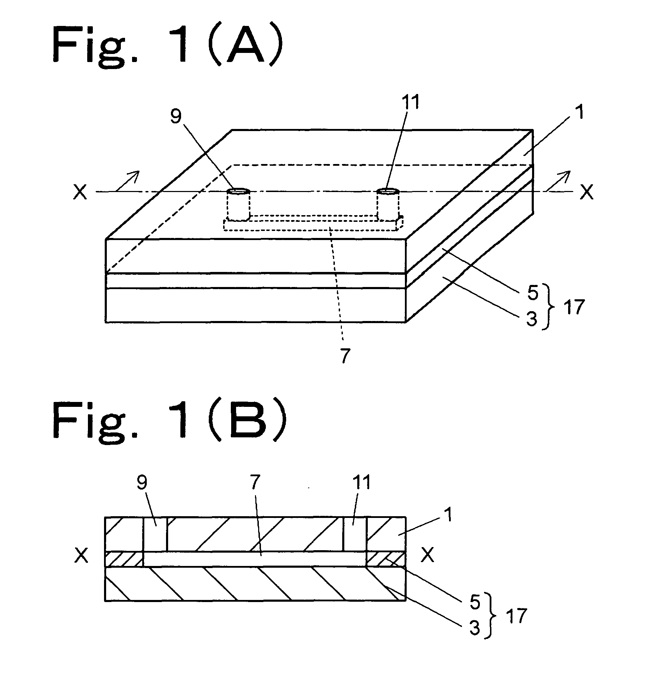

Fig. 1(A) is a perspective view showing the structure of a flow cell according to one embodiment (a first embodiment) of the present invention, and Fig. 1(B) is a sectional view taken along the X-X line in Fig. 1(A).
The flow cell according to the first embodiment includes a plate-shaped glass substrate 3, an adhesive fluorocarbon resin sheet 5 having a groove as a flow path 7 formed by cutting, and a glass substrate 1 as a cover member having through holes 9 and 11 as a fluid inlet and a fluid outlet formed at positions corresponding to both ends of the groove. The fluorocarbon resin sheet 5 is interposed between the glass substrates 1 and 3, and the fluorocarbon resin sheet 5 itself bonds the glass substrate 1 and the glass substrate 3 together. The glass substrate 3 and the fluorocarbon resin sheet 5 bonded to the glass substrate 3 constitute a flow path member 17.
The fluorocarbon resin sheet 5 is formed using Neoflon™ EFEP RP-4020, and therefore has a melting point of 155 to 170°C and a decomposition temperature of 355°C.

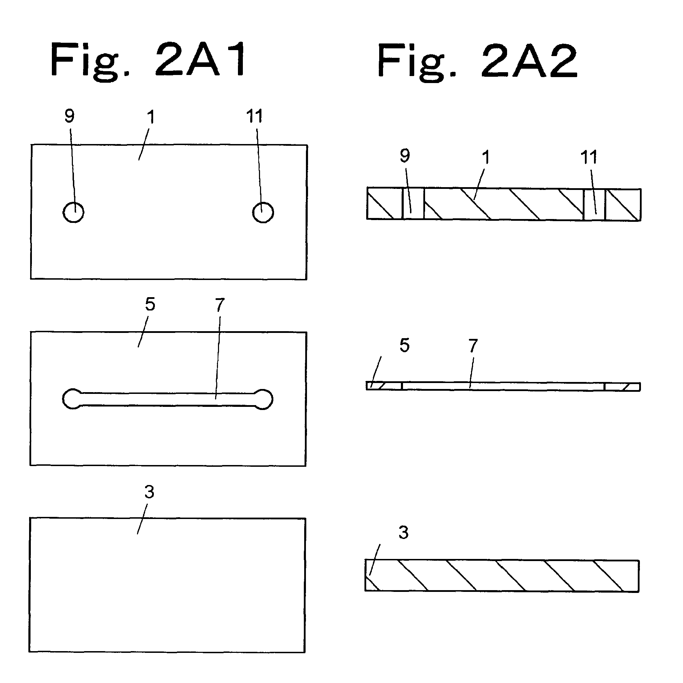

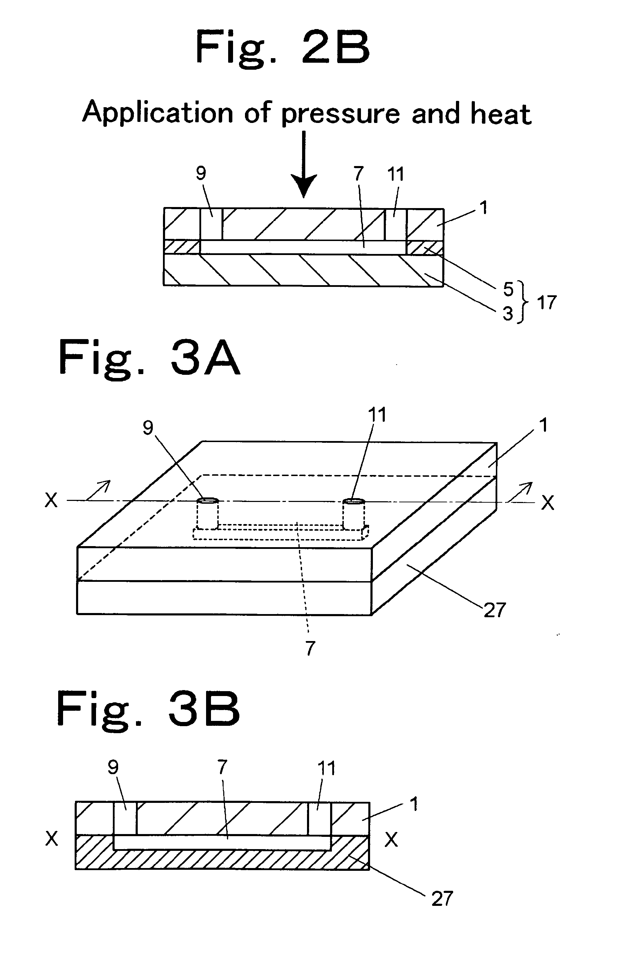

Fig. 2 is a diagram showing the process of producing a flow cell according to the first embodiment, wherein Fig. 2(A1) shows exploded plan views of members constituting the flow cell according to the first embodiment, Fig. 2(A2) shows exploded sectional views of the members shown in Fig. 2(A1), and Fig. 2(B) is a sectional view showing a state where these members are bonded together. Hereinbelow, a method for producing a flow cell according to the first embodiment will be described with reference to Figs. 1 and 2.

Each of the glass substrates 1 and 3 has flat surfaces. In the glass substrate 1, through holes 9 and 11 as a fluid inlet and a fluid outlet are formed by, for example, ultrasonic machining or sandblasting.
In the fluorocarbon resin sheet 5, a through groove as a flow path 7 is formed between positions corresponding to the through holes 9 and 11 formed in the glass substrate 1, and the through groove is formed by, for example, cutting using a cutting plotter. It is to be noted that as shown in Fig.2, the through groove has a shape in such a way that both ends thereof are slightly larger in width than a portion between the ends, but a fine flow path having a complicated shape can also be easily formed using a cutting plotter.

Then, the fluorocarbon resin sheet 5 having a through groove formed by cutting is laminated on the glass substrate 3 having flat surfaces, and then the glass substrate 1 is further laminated on the fluorocarbon resin sheet 5 so that one end of the flow path 7 of the fluorocarbon resin sheet 5 is aligned with the through hole 9 and the other end of the flow path 7 is aligned with the through hole 11. The obtained laminate is pressed at a pressure of about 10 kPa while heated to 250°C, which is higher than the melting point of the fluorocarbon resin sheet 5 but lower than the decomposition temperature of the fluorocarbon resin sheet 5,.to allow the fluorocarbon resin sheet 5 to bond the glass substrate 1 and the glass substrate 3 together, and is then cooled to obtain a flow cell.

The fluorocarbon resin sheet 5 can also be formed using Neoflon™ EFEP RP-5000. However, Neoflon™ EFEP RP-5000 has a melting point of 190 to 200°C and a decomposition temperature of 380°C, and therefore, in a case where the fluorocarbon resin sheet 5 is formed using Neoflon™ EFEP RP-5000, it is necessary to carry out bonding between the glass substrates 1 and 3 at a higher temperature as compared to the above-described case where the fluorocarbon resin sheet 5 is formed using Neoflon™ EFEP RP-4020.

Hereinbelow, a flow cell according to another embodiment (a second embodiment) of the present invention will be described with reference to Fig. 3. Fig. 3(A) is a perspective view of a flow cell according to another embodiment (a second embodiment) of the present invention, and Fig. 3(B) is a sectional view taken along the X-X line in Fig. 3(A).
The flow cell according to the second embodiment includes: a fluorocarbon resin body 27 entirely made of an adhesive fluorocarbon resin and having a groove as a flow path 7 formed in the surface thereof, and a glass substrate 1 as a cover member provided to cover the groove of the fluorocarbon resin body 27. The flow cell according to the second embodiment is obtained by bonding the fluorocarbon resin body 27 and the glass substrate 1 together by means of adhesiveness of the adhesive fluorocarbon resin. The glass substrate 1 has through holes 9 and 11 formed at positions corresponding to both ends of the groove as a flow path 7, and the through holes 9 and 11 will function as a fluid inlet 9 for introducing a fluid into the flow path 7 and a fluid outlet 11 for discharging the fluid from the flow path 7.
The fluorocarbon resin body 27 is formed using, for example, Neoflon™ EFEP RP-4020 which is also used in the first embodiment

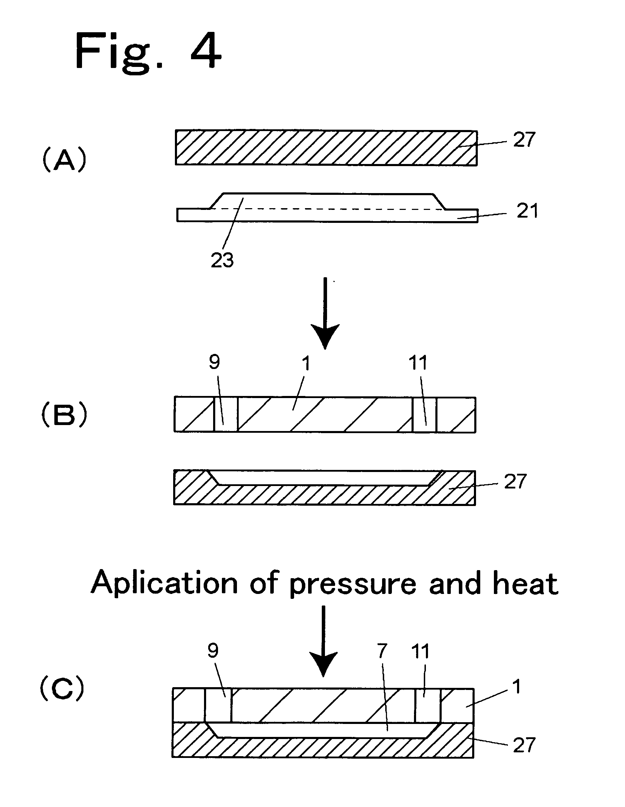

Fig. 4 is a diagram showing the process of producing a flow cell according to the second embodiment, wherein Figs. 4(A) and 4(B) are sectional views showing the process of producing a flow cell according to the second embodiment and Fig. 4(C) is a sectional view showing a state where members constituting the flow cell according to the second embodiment are bonded together.
Hereinbelow, a method for producing a flow cell according to the second embodiment will be described with reference to Fig. 4.
(A) A silicon substrate 21, which is a mold for forming a groove in the fluorocarbon resin body 27, has a structure (a projection 23) formed by, for example, photoengraving and etching using an alkaline chemical solution.

The adhesive fluorocarbon resin body 27 is laminated on the surface of the silicon substrate 21 having the projection 23 formed thereon, and the laminate is heated to, for example, 150°C and pressed at, for example, 0.4 MPa to form a groove as a flow path 7 in the surface of the fluorocarbon resin body 27. The temperature for heating the laminate is preferably near the melting point of the adhesive fluorocarbon resin.

(B) As in the case of the first embodiment, through holes 9 and 11 as a fluid inlet and a fluid outlet are formed in a flat plate-shaped glass substrate 1 as a cover member by, for example, ultrasonic machining or sandblasting.
(C) The glass substrate 1 is laminated on the fluorocarbon resin body 27 having a groove formed therein so that one end of the flow path 7 is aligned with the through hole 9 and the other end of the flow path 7 is aligned with the through hole 11, and the obtained laminate is heated to 250°C and pressed at about 10 kPa to bond the glass substrate 1 and the fluorocarbon resin body 27 together to obtain a flow cell.

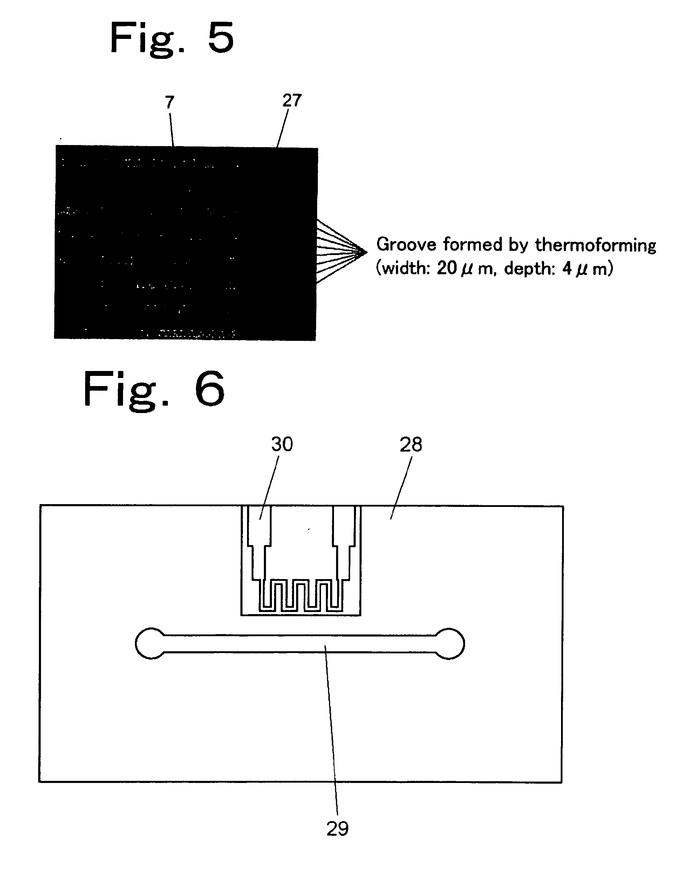

Fig. 5 is a microscope image of the flow cell according to the second embodiment The flow path 7 can be observed through the glass substrate 1. In this case, the groove 7 formed in the fluorocarbon resin body 27 has a width of 20 µm and a depth of 4 µm.

Hereinbelow, a flow cell according to yet another embodiment (a third embodiment) of the present invention will be described.
As described above, the flow cell according to the first embodiment or the second embodiment is obtained by laminating the adhesive fluorocarbon resin sheet 5 on the glass substrate 3, or by laminating the glass substrate 1 on the fluorocarbon resin body 27 so that one end of the flow path 7 is aligned with the through hole 9 and the other end of the flow path 7 is aligned with the through hole 11. The flow cell according to the third embodiment has a metal film, such as platinum, formed by, for example, sputtering on the glass substrate 1 or the glass substrate 3 to further improve adhesion between the glass substrate and the fluorocarbon resin sheet 5 or between the glass substrate and the fluorocarbon resin body 27. By providing such a metal film on the surface of the glass substrate to be bonded to the fluorocarbon resin sheet 5 or the fluorocarbon resin body 27, it is possible to improve adhesion between the glass substrate and the fluorocarbon resin sheet 5 or between the glass substrate and the fluorocarbon resin body 27, thereby more effectively preventing the formation of a gap between members constituting the flow cell and therefore preventing liquid leakage.

Further, such a metal film can be patterned as shown in Fig. 6. Fig. 6 is a plan view showing one example of the pattern of the metal film. The reference numeral 28 represents a metal film formed on the glass substrate 1 or 3, and the reference numeral 29 represents an opening formed at a portion corresponding to a groove as a flow path. The metal film 28 is formed to the edge of the groove as a flow path. The reference numeral 30 represents an electrode pattern formed by patterning the metal film 28.
For example, the electrode pattern 30 shown in Fig. 6 can be used as a resistor bulb. In this case, the temperature of the substrate of the flow cell can be measured by applying voltage across two electrodes and measuring the resistance between the electrodes.

The present invention is not limited by the heating temperature, pressure, or flow path width described with reference to the preferred embodiments, and includes all embodiments within the scope of the appended claims.

### INDUSTRIAL APPLICABILITY

The present invention can be applied to a flow cell constituting a flowmeter, an electric conductivity meter, or the like for use in an analytical instrument

### BRIEF DESCRIPTION OF THE DRAWINGS

Fig. 1(A) is a perspective view of a flow cell according to one embodiment (a first embodiment) of the present invention;
Fig. 1(B) is a sectional view taken along the X-X line in Fg. 1(A);
Fig. 2 is a diagram showing the process of producing a flow cell according to the first embodiment, wherein Fig. 2(A1) shows exploded plan views of members constituting the flow cell according to the first embodiment, Fig. 2(A2) shows exploded sectional views of the members shown in Fig. 2(A1), and Fig. 2(B) is a sectional view showing a state where these members are bonded together;
Fig. 3(A) is a perspective view of a flow cell according to another embodiment (a second embodiment) of the present invention;
Fig. 3(B) is a sectional view taken along the X-X line in Fig. 3(A);
Fig. 4 is a diagram showing the process of producing a flow cell according to the second embodiment, wherein Figs. 4(A) and 4(B) are sectional views showing the process of producing a flow cell according to the second embodiment and Fig. 4(C) is a sectional view showing a state where members constituting the flow cell according to the second embodiment are bonded together;
Fig. 5 is a microscope image of the flow cell according to the second embodiment;
Fig. 6 is a plan view showing a metal film pattern formed on a glass substrate;
Fig. 7(A) is a perspective view of a conventional flow cell; and
Fig. 7(B) is a sectional view taken along the X-X line in Fig. 7(A).

### EXPLANATION OF REFERENCE NUMERALS

- 1, 3: glass substrate
- 5: adherent fluororesin sheet
- 7: flow channel
- 9, 11: through holes as a liquid inlet and a liquid outlet
- 15: cutout portion
- 17: Flow channel member
- 21: silicon substrate
- 23: projection
- 27: fluorocarbon resin body
- 28: metal film

## Claims

1. A flow cell comprising:
a flow path member, with at least a surface layer of which is made of a fluorocarbon resin, the surface layer having a groove formed therein as a flow path; and
a cover member bonded to the surface layer of the flow path member by the fluorocarbon resin itself,
wherein at least either the flow path member or the cover member has two through holes as a fluid inlet and a fluid outlet formed at positions corresponding to both ends of the groove.

2. The flow cell according to claim 1,
wherein the flow path member has a structure, in which a fluorocarbon resin film is laminated on the surface of a flat plate-shaped member, and therefore the fluorocarbon resin film serves as the surface layer made of a fluorocarbon resin,
wherein the groove is constituted from a through hole formed in the fluorocarbon resin film and the surface of the flat plate-shaped member,
wherein the fluorocarbon resin film is interposed between the flat plate-shaped member and the cover member and the fluorocarbon resin film itself bonds them together.

3. The flow cell according to claim 1, wherein the flow path member is formed from a fluorocarbon resin body entirely made of a fluorocarbon resin and therefore, a surface layer of the fluorocarbon resin body serves as the surface layer made of a fluorocarbon resin,
wherein the groove is a recess formed in the surface of the fluorocarbon resin body.

4. The flow cell according to any one of claims 1 to 3, wherein the fluorocarbon resin film or the fluorocarbon resin body is made of an adhesive fluorocarbon resin which exhibits adhesiveness to a substrate made of another material at a certain temperature or higher.

5. The flow cell according to any one of claims 1 to 4, wherein at least a part of the bonding surface between the flow path member and the cover member is covered with a metal layer.

6. The flow cell according to claim 5, wherein the metal layer covers the glass substrate including the edge of the groove, or the flow path.

7. A method for producing a flow cell, comprising the steps of:
(A) forming a through hole in the form of a groove as a flow path in a fluorocarbon resin film;
(B) forming two through holes as a liquid inlet and a liquid outlet in either a flat plate-shaped member or a cover member at positions corresponding to both ends of the groove; and
(C) interposing the fluorocarbon resin film between the flat plate-shaped member and the cover member so that one end of the groove is aligned with one of the through holes and the other end of the groove is aligned with the other through hole to obtain a laminate, and heating and pressing the laminate until the fluorocarbon resin film exhibits adhesiveness so that the fluorocarbon resin film bonds the flat plate-shaped member and the cover member together.

8. A method for producing a flow cell, comprising the steps of:
(A) laminating a fluorocarbon resin body on the surface of a molding die having a projection formed thereon by which a groove as a flow path is to be formed, and relatively pressing the fluorocarbon resin body against the molding die to mold the fluorocarbon resin body while heating the fluorocarbon resin body to a temperature near the melting point of the fluorocarbon resin body;
(B) forming two through holes as a liquid inlet and a liquid outlet in the fluorocarbon resin body or a cover member at positions corresponding to both ends of the groove; and
(C) laminating the cover member on the molded surface of the fluorocarbon resin body (in a case where the through holes are provided in the cover member, the cover member is laminated on the molded surface of the fluorocarbon resin body so that one end of the groove is aligned with the liquid inlet and the other end of the groove is aligned with the liquid outlet) to obtain a laminate, and pressing the laminate while heating until the fluorocarbon resin body exhibits adhesiveness to bond the fluorocarbon resin body and the cover member together.

9. The method for producing a flow cell according to claim 7 or 8, wherein the temperature to which the fluorocarbon resin film or the fluorocarbon resin body is heated to allow the fluorocarbon resin film or the fluorocarbon resin body to exhibit adhesiveness is equal to or higher than the melting point of a fluorocarbon resin constituting the fluorocarbon resin film or the fluorocarbon resin body but lower than the decomposition temperature of the fluorocarbon resin.

10. The method for producing a flow cell according to claim 7 or 8, wherein the fluorocarbon resin is an adhesive fluorocarbon resin which exhibits adhesiveness to a substrate made of another material at a certain temperature or higher,
wherein the temperature to which the fluorocarbon resin film or the fluorocarbon resin body is heated to allow the fluorocarbon resin film or the fluorocarbon resin body to exhibit adhesiveness is a temperature equal to or higher than the temperature, at which the adhesive fluorocarbon resin begins to exhibit adhesiveness, but lower than the decomposition temperature of the adhesive fluorocarbon resin.

11. The method for producing a flow cell according to any one of claims 7 to 10, further comprising prior to the bonding step, the step of forming a metal layer on at least a part of the surface of either of the members to be bonded to the fluorocarbon resin film or the fluorocarbon resin body.
